# EUROPÄISCHE PATENTSCHRIFT

(11) **EP 1 307 368 B1**
(45) Veröffentlichungstag und Bekanntmachung des Hinweises auf die Patenterteilung: **27.09.2006**
(21) Anmeldenummer: 01969553.5
(22) Anmeldetag: 30.07.2001
(51) Int. Cl.: B60T 8/00

(54) **STABILISIERUNGSEINRICHTUNG FÜR KRAFTFAHRZEUGE MIT DRUCKLUFTBETRIEBENEN BREMSEINRICHTUNGEN**
STABILIZING DEVICE FOR MOTOR VEHICLES COMPRISING COMPRESSED-AIR BRAKING SYSTEMS
DISPOSITIF DE STABILISATION POUR AUTOMOBILE COMPRENANT DES DISPOSITIFS DE FREINAGE PNEUMATIQUES

(30) Priorität: 02.08.2000 DE 10038046
(43) Veröffentlichungstag der Anmeldung: 07.05.2003
(73) Patentinhaber: KNORR-BREMSE SYSTEME FÜR NUTZFAHRZEUGE GMBH, 80809 München (DE)
(72) Erfinder: ZIEGLER, Andreas, 71287 Weissach (DE); HUMMEL, Stefan, 70191 Stuttgart (DE); WÖRNER, Dieter, 75031 Eppingen (DE); SCHWAB, Frank, 75438 Knittlingen (DE); HERGES, Michael, 70825 Korntal-Münchingen (DE); HECKER, Falk, 71706 Markgröningen (DE)
(86) Internationale Anmeldenummer: PCT/EP2001/008819
(87) Internationale Veröffentlichungsnummer: WO 2002/009990

(56) Entgegenhaltungen:
- EP-A- 0 482 374
- DE-A- 19 640 141
- DE-A- 19 813 783

## Beschreibung

Die Erfindung betrifft eine Stabilisierungseinrichtung für Kraftfahrzeuge mit druckluftbetriebenen Bremseinrichtungen.

Zur Stabilisierung von Kraftfahrzeugen ist es bekannt, ein elektronisches Stabilisierungsprogramm (ESP) in Verbindung mit einem elektronischen Bremssystem EBS zu verwenden. Bei einem solchen ESP wird das Fahrzeug in kritischen Situationen durch automatische radselektive Bremseingriffe sowie durch Motoreingriffe stabilisiert. Beim Pkw-ESP (Pkw = Personenkraftwagen) wird das Fahrzeug z.B. bei beginnendem Schleudern durch automatische radselektive Bremseingriffe sowie durch Motoreingriffe stabilisiert. Bei beginnender Instabilität des Fahrzeugs stimmt die gemessene Fahrzeugbewegung nicht mehr mit der durch den Fahrer am Lenkrad vorgegebenen (gewünschten) Fahrzeugbewegung überein. In dieser Situation stabilisiert ESP mittels radselektiver Bremseingriffe und mittels Motoreingriffe das Fahrzeug, so daß die Bewegung - innerhalb der physikalischen Möglichkeiten - dem Fahrerwunsch entspricht. So wird z.B. beim Übersteuern hauptsächlich das kurvenäußere Vorderrad und beim Untersteuem das kurveninnere Hinterrad gebremst. Hierzu werden neben der ABS-Sensorik (Drehzahlfühler an jedem Rad) noch Sensoren für den Lenkradwinkel (Fahrerwunsch) sowie für die Gierrate und die Querbeschleunigung des Fahrzeugs (Ist-Bewegung) verwendet (ABS = Antiblockiersystem). Um auch bei einer Fahrerbremsung das Fahrzeug stabilisieren zu können, wird außerdem eine Information über für den Bremswunsch des fahrers benötigt.

Die Abbremsung eines gewünschten einzelnen Rades des Fahrzeugs ist bei einem EBS-System aufgrund dessen Struktur problemlos möglich.

Das ESP für Nkw (Nkw = Nutzkraftwagen, z.Zt. für Sattelzüge) stellt eine Weiterentwicklung des Pkw-ESP dar, um die zwei zusätzlichen Freiheitsgrade Einknicken und Umkippen abzudecken. Es basiert auf dem Elektronischen Bremssystem EBS, das durch die ESP-Sesnoren (Lenkradwinkel, Gierrate und Querbeschleunigung) erweitert wird. Dabei wird zur Stabilisierung der Fahrzeugkombination auf niedrigem Reibwert (DSP-Funktion) z.B. beim Übersteuern zusätzlich zum kurvenäußeren Vorderrad der gesamte Auflieger gebremst. Dies ist durch das Anhängersteuermodul auch bei konventionellen Aufliegern (d.h. nur mit ABS ausgerüstet) möglich. Auf mittlerem und hohem Reibwert neigt ein Nutzfahrzeug eher zum Kippen als zum Schleudern, weshalb in diesem Fall die sogenannte ROP-Funktion greift (ROP = Rott-over-Protection, Überschlagschutz). Dabei wird die Geschwindigkeit des Fahrzeugs bei drohendem Umkippen durch Motor- und Bremseingriffe soweit verringert, das die Kippgefahr deutlich reduziert wird.

Die DE 198 13 783 A1 zeigt ein Bremssystem für ein Fahrzeug, das mit relativ wenigen Aktuatoren und mit einem komplizierten Steuerungssystem eine Fahrstabilisierung erreicht.

Die EP 0 482 374 A1 zeigt eine elektro-pneumatische Bremsanlage, bei der zur Verbesserung der Fahrzeugstabilisierung Signale eines Lenkradmomentsensors herangezogen werden.

Die DE 196 40 141 A1 zeigt ein Kraftfahrzeug mit einem druckluftbetriebenen Bremssystem, bei dem Bremszylinder mit ABS-Drucksteuerventilen vorgesehen sind. Die ABS-Drucksteuerventil sind dabei an ein Wechselventil angeschlossen, das einerseits über ein vom Fahrer des Fahrzeugs betätigtes Bremsventil und andererseits Ober ein elektrisch betätigbares Absperrventil mit einem Druckluftvorrat verbindbar ist. Wenn eine Steuereinrichtung eine Instabilität detektiert, dann werden die Bremszylinder mittels der Absperrventile mit Druckluft beaufschlagt, um an Fahrzeugrädern Bremskräfte zu erzeugen, zu erhöhen oder zu vermindern. Dadurch wird Einfluß auf die Seitenführungskraft der Fahrzeugräder genommen und es werden Momente um die Hochachse des Fahrzeugs erzeugt, die dessen Bewegung stabilisieren sollen. Trotzdem kommt es mit derart ausgerüsteten Fahrzeugen im Betrieb noch zu gefährlichen Situationen, wenn diese mit einem Anhänger oder Auflieger betrieben werden.

Bei den bekannten Vorrichtungen ist von Nachteil, daß hohe Kosten für das Vorsehen der entsprechenden Aktuatoren entstehen. Außerdem sind die bekannten Vorrichtungen kompliziert aufgebaut. Trotzdem verlangt insbesondere der US-Markt nach Stabilisierungssystemen wie ESP oder ROP.

Der Erfindung liegt die Aufgabe zugrunde, ein verbessertes Kraftfahrzeug bereitzustellen.

Ein ASR-Ventil stellt dabei insbesondere die folgende Funktionalität bereit. Es schaltet bei elektrischer Ansteuerung den Druck am Eingang des Ventils an dessen Ausgang durch. Beim Ausschalten der Ansteuerung wird der Druck am Ausgang abgebaut bzw. und entlüftet.

Ein ABS-Drucksteuerventil stellt dabei insbesondere die folgende Funktionalität bereit. Es weist zwei Magnetventile auf, von denen eines bei Ansteuerung den Druck am Eingang vom Ausgang trennt. Das andere Magnetventil entlüftet bei Ansteuerung den Ausgang. Damit läßt sich ein am Ausgang angeschlossener Verbraucher selektiv und genau mit Druck beaufschlagen. Die Magnete können auch gepulst betrieben angesteuert werden.

Ein der Erfindung zugrundeliegender Gedanke trägt den Anforderungen gemäß der Aufgabe insofern Rechnung, als die Komponenten eines an einem Kraftfahrzeug vorhandenen ABS- und/oder ASR-Systems so genutzt werden, daß damit eine ESP-Funktion erreicht wird. Hierfür können zusätzliche Komponenten vorgesehen sein.

So kann wenigstens ein zusätzliches Ventil vorgesehen sein, das unter Umgehung des vom Fahrer betätigten Bremsventils den Vorratsdruck des Fahrzeugs an den Radventilen der einzelnen Bremszylinder anlegt. Mit den an jedem Rad vorgesehe- : nen ABS-Ventilen, die jetzt praktisch den Druck nur vermindern können, wird der jeweilige Druck für die Bremzylinder dann geeignet angesteuert. Wenn es die Stabilität des Fahrzeugs fördert, wenn ein bestimmtes Rad einseitig angebremst sein soll, während sich das andere Rad der Achse drehen soll, wird dies dadurch bewirkt, daß auf der einen Seite der Druck abgesperrt wird und daß auf der anderen Seite vor dem betreffenden Radventil ein bestimmter Druck angesteuert wird.

ABS-Systeme umfassen solche Radventile, aber ein zusätzliches Ventil, das am Fahrer vorbei einen Bremsdruck ansteuern kann, ist beim ABS-System nicht vorhanden.

Bei dem erfindungsgemäßen Stabilitätsprogramm wird so die Möglichkeit bereitgestellt, vorzugsweise jedes Rad der Zug maschine sowie des Anhängers einzeln und unabhängig zu bremsen.

Um die vorhandenen ABS/ASR-Systeme für ESP tauglich zu machen, werden im folgenden mehrere Konzepte bzw. Ausführungsbeispiele vorgestellt. Allen gemeinsam ist, daß ABS- und/oder ASR-Komponenten verwendet werden, um die Kosten so gering wie möglich zu halten.

Die Erfindung läßt sich auf einfache Weise bei Zugmaschinen und Anhängern einsetzen. Dadurch wird ein ESP für Kfz mit druckluftbetriebenen Bremssystemen bereitgestellt, das nahezu die selben Steuerungs- und Regelungsmöglichkeiten aufweist, wie elektromechanische ESP-Systeme. Wenn zusätzlich noch auf die Motorsteuerung eingewirkt wird, kann so eine einfache und gute Stabilisierung bei vielen Notsituationen erreicht werden.

Die Erfindung ist in der Zeichnung anhand mehrerer Ausführungsbeispiele veranschaulicht.
- Figur 1: zeigt einen systematischen Schaltplan eines ersten Kraftfahrzeugs,
- Figur 2: zeigt einen systematischen Schaltplan eines zweiten Kraftfahrzeugs und
- Figur 3: zeigt einen systematischen Schaltplan eines dritten Kraftfahrzeugs.

Die Ausführungsbeispiele zeigen die jeweilige pneumatische Anlage und die betreffende Sensorik. Ausgangspunkt für alle Ausführungsbeispiele ist ein (mindestens) 4-kanaliges ABS System mit ASR Brems- und Motoreingriff mit den folgenden Komponenten:
- ein Zentralsteuergerät 1 mit CAN-Anschluß (o.ä. Schnittstelle zum Motor)
ATC= Automatic Traction Control
ECU = Electronic Control Unit
Der Gesamtcluster muß ASR-, ABS- und ESP-Funktionen bereitstellen und kann aus mehreren Steuergeräten bestehen,
- vier Drehzahlfühler 2 (= SS) für die Räder des Kraftfahrzeugs (je ein Drehzahlfühler 2 für die Räder der Vorderachse 3, je ein Drehzahlfühler 2 für die Räder der vorderen Hinterachse 4; kein Drehzahlfühler für die Räder der hinteren Hinterachse 5),
- vier Drucksteuerventile 6 für die Radbremszylinder 7 (je ein Drucksteuerventil 6 für die Radbremszylinder 7 der Vorderachse 3, je ein Drucksteuerventil 6 für zwei auf der selben Fahrzeugseite gelegene Radbremszylinder 7 der vorderen Hinterachse 4 und der hinteren Hinterachse 5). Die Drucksteuerventile 6 sind als ABS-Ventile ausgebildet, die selektiv entlüftbar sind, so daß ein an sich gebremstes Rad wieder freigebbar ist,
- ein Bremsventil 8 zur Betätigung durch den Fahrer des KFZ
- eine Druckluftversorgung, die an den mit einem fetten Pfeil gezeigten Stellen zur Verfügung steht
- ein ASR-Ventil 9, das auf bekannte Weise im Zusammenhang mit den Drucksteuerventilen 6 die Antischlupfregelung ASR bereitstellt
- ein Relay-Valve 11, bei dem eine kleine Steuermenge vom ASR-Ventil 9 eine große Arbeitsmenge aus dem "Vorrat" steuert
- ein bekanntes Trailer-Protection-(TP)-Valve 16

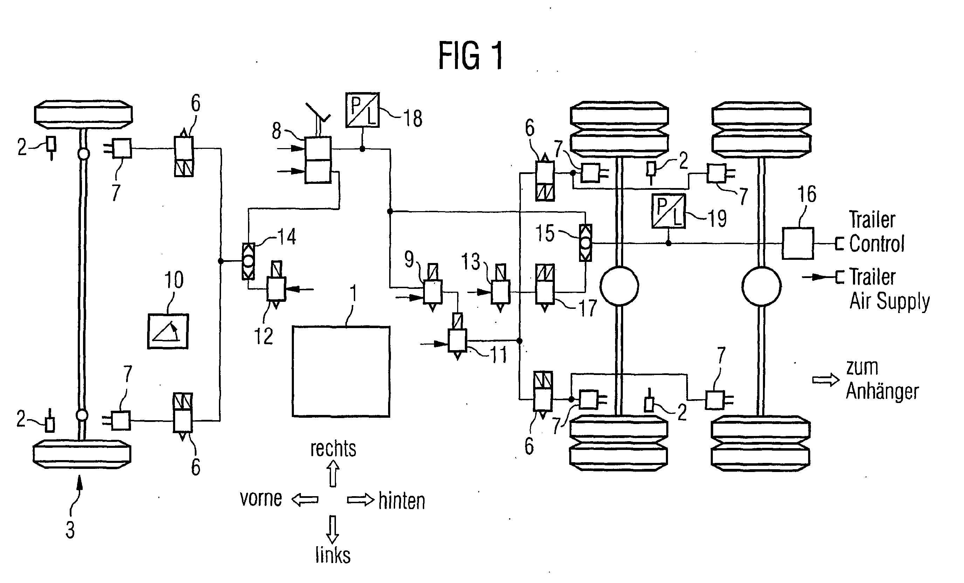

Figur 1 zeigt die erfindungsgemäße Ausgestaltung gemäß einem ersten Pneumatik-Konzept.

Zusätzlich zu den oben genannten Komponenten werden
- ein ASR-Ventil 12 für die Vorderachsansteuerung,
- ein ASR-Ventil 13 für die Hängeransteuerung,
- ein Wechselventil 14 für die Vorderachsansteuerung,
- ein Wechselventil 15 für die Hängeransteuerung
- ein Lenkwinkelsensor 10,
- ein Drucksteuerventil 17 zur Ansteuerung des Anhängers
- ein erster Drucksensor 18 am Bremsventil 8 und
- ein zweiter Drucksensor 19 zwischen Wechselventil 15 und TP-Valve 16 vorgesehen.

Bei Normalbetrieb ohne ESP-Eingriff müssen die beiden Drucksensoren 18, 19 stets im wesentlichen denselben Wert anzeigen. Dies dient zur Funktionskontrolle der Drucksensoren.

Mit dieser Anordnung kann jedes einzelne Rad über die ASR-Ventile und die Drucksteuerventile (ähnlich wie beim ASR) individuell gebremst werden, und zwar auch dann, wenn der Fahrer nicht das Bremsventil 8 betätigt. Das gleiche gilt für den Anhänger.

Wenn das erfindungsgemäße Stabilitätssystem vorsieht, daß der Anhänger bremst, ohne daß hierbei das Bremsventil 8 betätigt wird, wird folgendermaßen vorgegangen. Zunächst wird das ASR-Ventil 13 betätigt, so daß das Drucksteuerventil 17 mit Druckluft aus dem Vorrat beaufschlagt wird. Dadurch wird das TP-Valve 16 für den Anhänger angesteuert, so daß die Räder des Anhängers abgebremst werden. Bei dieser Bremsfunktion wird über den zweiten Drucksensor 19 der zum Anhänger hin aufgebaute Druck gemessen und gemäße einem Vorgabewert nachgeregelt. Wenn während eines ESP-Eingriffs der Fahrer bremst, so wird dies über den ersten Drucksensor 18 erfaßt und der vom Fahrer angeforderte Bremsdruck gemessen. Dieser gemessene Brems- oder Anforderungsdruck wird bei der Bremsung des Anhängers mit Hilfe des Drucksteuerventils 17 so berücksichtigt, daß der Bremsdruck zu dem gemäß dem ESP-Eingriff erforderlichen Druck hinzuaddiert und an den Anhänger weitergegeben wird. Ohne momentanen ESP-Eingriff erfolgt die Druckeinsteuerung bei einer Fahrerbremsung auf konventionelle Art durch das Wechselventil 15. Das Wechselventil 15 schaltet nach dem Prinzip einer Maximumauswahl zwischen dem "ESP-Druck" und dem Anforderungsdruck hin- und her.

Wenn das erfindungsgemäße Stabilitätssystem vorsieht, das linke Vorderrad zu bremsen, ohne daß hierbei das Bremsventil 8 betätigt wird, wird folgendermaßen vorgegangen. Zunächst wird das ASR-Ventil 12 betätigt, so daß die beiden Drucksteuerventile 6 an der Vorderachse mit Druckluft aus dem Vorrat beaufschlagt werden. Dabei wird das Drucksteuerventil 6 für das rechte Rad der Vorderachse so angesteuert, daß sich dieses drehen kann. Das Drucksteuerventil 6 für das linke Rad der Vorderachse wird so angesteuert, daß dieses abgebremst wird. Hierzu wird über das betreffende Drucksteuerventil durch Variation von Pulsanzahl und Länge der Druckluftstöße seines hier nicht gezeigten Einlaßmagneten ein Druck in den Bremszylinder 7 eingesteuert. Dabei kommt ein Druckschätzungsalgorithmus des ABS zum Einsatz, so daß eine gewünschte Bremsung erfolgen kann, ohne daß der Druck in der Verbindungsleitung zwischen Drucksteuerventil 6 und Bremszylinder 7 gemessen werden muß. Wenn während eines ESP-Eingriffs der Fahrer bremst, so wird dies über den ersten Drucksensor 18 erfaßt und der vom Fahrer angeforderte Bremsdruck gemessen. Dieser gemessene Brems- oder Anforderungsdruck wird bei der Bremsung der Räder der Vorderachse 3 mit Hilfe der Drucksteuerventile 6 so berücksichtigt, daß der Bremsdruck zu dem gemäß dem ESP-Eingriff erforderlichen Druck hinzuaddiert und an den betreffenden Bremszylinder weitergegeben wird (hier auf den linken Bremszylinder). Ohne momentanen ESP-Eingriff (hier an dem rechten Bremszylinder) erfolgt die Druckeinsteuerung nur gemäß dem Bremsdruck. Ohne irgendeinen ESP-Eingriff erfolgt die Druckeinsteuerung bei einer Fahrerbremsung auf konventionelle Art durch das Wechselventil 14. Das Wechselventil 14 schaltet nach dem Prinzip einer Maximumauswahl zwischen dem "ESP-Druck" und dem Anforderungsdruck hin- und her.

Wenn das erfindungsgemäße Stabilitätssystem vorsieht, die beiden linken Hinterräder zu bremsen, ohne daß hierbei das Bremsventil 8 betätigt wird, wird folgendermaßen vorgegangen. Zunächst wird das ASR-Ventil 9 betätigt, so daß die beiden Drucksteuerventile 6 an den Hinterachsen über das Relay-Valve 11 mit Druckluft aus dem Vorrat beaufschlagt werden. Danach wird das Drucksteuerventil 6 für die rechten Räder der Hinterachsen so angesteuert, daß sich diese drehen können. Das Drucksteuerventil 6 für die linken Räder der Hinterachsen wird so angesteuert, daß diese abgebremst werden. Wenn während eines ESP-Eingriffs der Fahrer bremst, so wird dies über den ersten Drucksensor 18 erfaßt und der vom Fahrer angeforderte Bremsdruck gemessen. Dieser gemessene Brems- oder Anforderungsdruck wird bei der Bremsung der Räder der Hinterachsen 4, 5 mit Hilfe der Drucksteuerventile 6 so berücksichtigt, daß der Bremsdruck zu dem gemäß dem ESP-Eingriff erforderlichen Druck hinzuaddiert und an den betreffenden Bremszylinder weitergegeben wird (hier auf den linken Bremszylinder). Ohne ESP-Eingriff (hier an dem rechten Bremszylinder) erfolgt die Druckeinsteuerung nur gemäß dem Bremsdruck.

Vorteile :
- vollständige ESP-Funktion möglich
- kann durch Addition von Standardkomponenten zu einem konventionellen Bremssystem realisiert werden
- keine neuen Komponenten nötig (Ersatzteilversorgung)
- verbesserte ABS-Funktion durch Kenntnis des Fahrerwunsches
- keine Beeinflussung der Achsen des Fahrzeugs und des Anhängers untereinander (durch drei ASR-Ventile vollständig getrennt)

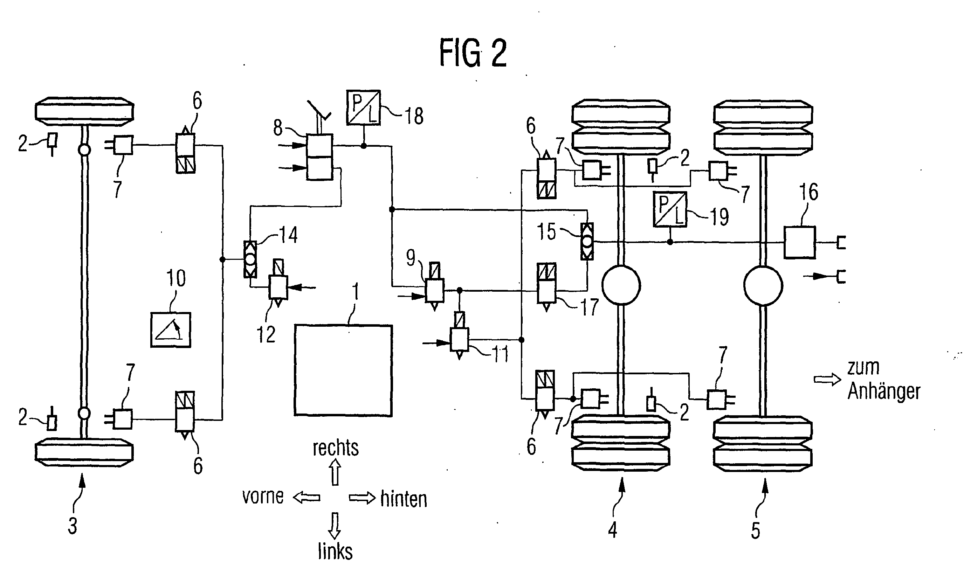

Figur 2 zeigt die erfindindungsgemäße Ausgestaltung gemäß einem zweiten Pneumatik-Konzept.

Das Ausführungsbeispiel gemäß Figur 2 entspricht im wesentlichen dem Ausführungsbeispiel gemäß Figur 1.

Im Unterschied zum Ausführungsbeispiel gemäß Figur 1 weist das Ausführungsbeispiel gemäß Figur 2 jedoch kein ASR-Ventil 13 auf.

Auch mit dieser Anordnung kann jedes einzelne Rad über die ASR-Ventile 9, 12 und die Drucksteuerventile 6, 17 (ähnlich wie beim ASR) individuell gebremst werden. Der Anhänger wird über das ASR-Ventil einer der beiden Achsen (vorzugsweise über das ASR-Ventil 9 der Hinterachse) und das zusätzliche Drucksteuerventil 17 mit angesteuert. Wenn während eines ESP-Eingriffs der Fahrer bremst, so wird dies über den Drucksensor 18 erfaßt und der angeforderte Druck mit Hilfe der Drucksteuerventile 6, 17 eingestellt. Ohne ESP-Eingriff erfolgt die Druckeinsteuerung bei einer Fahrerbremsung auf konventionelle Art durch die Wechselventile 14, 15 (Maximumauswahl).

### Vorteile:

- keine Beeinflussung der Achsen untereinander (durch zwei ASR-Ventile 9, 12 vollständig getrennt)
- Beeinflussung zwischen Hinterachse und Anhänger grundsätzlich möglich, weil über dasselbe ASR-Ventil 9 angesteuert,
- Steuerung des Anhängerbremsdruckes über die Kopplung mit einer der beiden Achsen etwas aufwendiger, weil der Effekt der Beeinflussung durch die Drucksteuerventile 6, 17 an den jeweiligen Bremszylindern ausgeglichen wird,
- vollständige ESP-Funktion möglich
- kann durch Addition von Standardkomponenten zu einem konventionellen Bremssystem realisiert werden
- keine neuen Komponenten nötig (Ersatzteilversorgung)

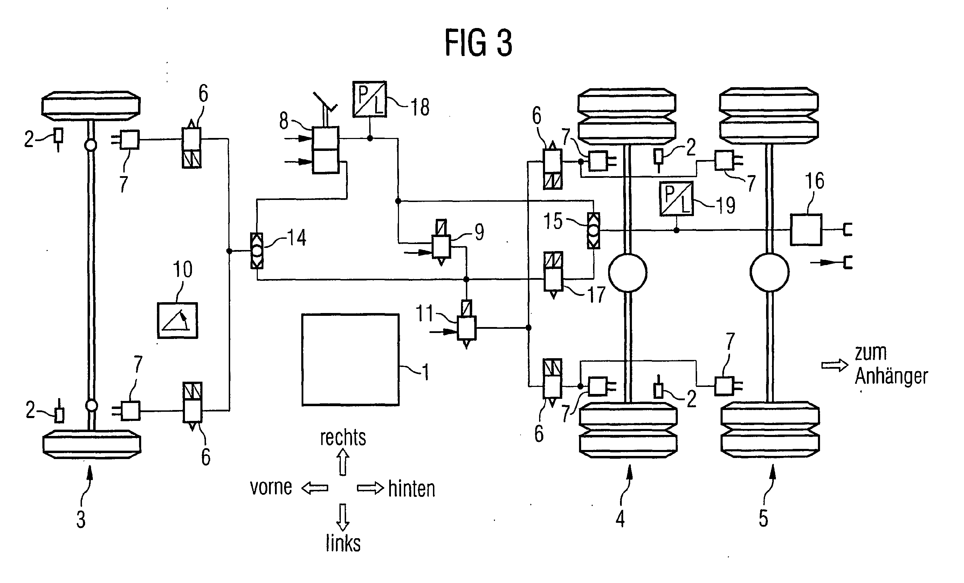

Figur 3 zeigt die erfindindungsgemäße Ausgestaltung gemäß einem dritten Pneumatik-Konzept.

Das Ausführungsbeispiel gemäß Figur 3 entspricht im wesentlichen dem Ausführungsbeispiel gemäß Figur 2.

Im Unterschied zum Ausführungsbeispiel gemäß Figur 2 weist das Ausführungsbeispiel gemäß Figur 3 jedoch kein ASR-Ventil 12 auf.

Auch mit dieser Anordnung kann jedes einzelne Rad über das ASR-Ventil 9 und die Drucksteuerventile 6, 17 (ähnlich wie beim ASR) individuell gebremst werden. Der Anhänger und die Vorderachse werden über das bereits vorhandene ASR-Ventil 9 der Hinterachse (und beim Anhänger das zusätzliche Drucksteuerventil 17) mit angesteuert. Wenn während eines ESP-Eingriffs der Fahrer bremst, so wird dies über den Drucksensor 18 erfaßt und der angeforderte Druck mit Hilfe der Drucksteuerventile 6, 17 eingestellt. Ohne ESP-Eingriff erfolgt die Druckeinsteuerung bei einer Fahrerbremsung auf konventionelle Art durch die Wechselventile 14, 15 (Maximumauswahl).

### Vorteile:

- Beeinflussung der Achsen untereinander und Beeinflussung zwischen Hinterachse und Anhänger grundsätzlich möglich, weil über dasselbe ASR-Ventil 9 angesteuert,
- Steuerung des Anhängerbremsdruckes über die Kopplung mit einer der beiden Achsen etwas aufwendiger, weil der Effekt der Beeinflussung durch Drucksteuerventile 6, 17 an den jeweiligen Bremszylindern ausgeglichen wird,
- vollständige ESP-Funktion möglich
- kann durch Addition von Standardkomponenten zu einem konventionellen Bremssystem realisiert werden
- keine neuen Komponenten nötig (Ersatzteilversorgung)

Der Erfindung liegt auch ein einfaches Sensorik-Konzept zugrunde. Zusätzlich zu den bei herkömmlichen ABS/ASR-Systemen verwendeten Sensoren brauchen nur noch wenige zusätzliche Sensoren vorgesehen werden:
- zwei oder mehr Drucksensoren 18, 19 zur Sensierung des Fahrerbremsdruckes (Vordruck) und mindestens eines Bremsdruckes (an Vorderrädern oder Hinterrädern oder hinter dem Drucksteuerventil zum Anhänger)
- ein Gierratensensor (Yawrate-Sensor),
- ein Querbeschleunigungssensor und/oder
- ein Lenk(rad)winkelsensor 10.

Bereits mit dieser einfachen Sensorik kann eine vollständige ESP-Funktion dargestellt werden.

Vorteile:
- vollständige ESP-Funktion möglich
- verbesserte ABS-Funktion durch Kenntnis des Fahrerwunsches
- sehr gute Überwachungsmöglichkeiten (Drucksensor kann bei jeder Bremsung überprüft werden)

Gemäß der Erfindung kann der im Einzelfall aufwendig einzubauende Lenkwinkelsensor 10 auch weggelassen werden. Auf die Funktion zur Vermeidung des Umkippens hat der fehlende Lenkwinkelsensor keine so großen Auswirkungen. Auch können Stabilisierungseingriffe gegen Einknicken weiterhin durchgeführt werden, indem der Schwimmwinkel bzw. die Schwimmwinkelgeschwindigkeit des Zugfahrzeugs stärker in die Regelung mit einbezogen wird. Bei diesem Konzept besteht nicht - wie bei einer reinen ROP-Funktion - die Gefahr, daß bei einem ROP-Bremseingriff das Fahrzeug aufgrund dieses Eingriffs einknickt und die Situation deshalb mit ROP verschlechtert werden könnte, da das Einknicken durch entsprechende Stabilisierungseingriffe verhindert wird.

### Bezugszeichenliste

- 1: Zentralsteuergerät
- 2: Drezahlfühler
- 3: Vorderachse
- 4: vordere Hinterachse
- 5: hintere Hinterachse
- 6: Drucksteuerventil
- 7: Radbremszylinder
- 8: Bremsventil
- 9: ASR-Ventil
- 10: Lenkwinkelmesser
- 11: Relay-Ventil
- 12: ASR-Ventil
- 13: ASR-Ventil
- 14: Wechselventil
- 15: Wechselventil
- 16: TP-Valve
- 17: erster Drucksensor
- 18: zweiter Drucksensor

## Patentansprüche

1. Druckluftbetriebenes Bremssystem für ein Kraftfahrzeug, das die folgenden Merkmale aufweist:
- wenigstens zwei Bremszylinder (7),
- die Bremszylinder (7) weisen ABS-Drucksteuerventile (6) auf,
- die ABS-Drucksteuerventile (6) sind jeweils an ein Wechselventil (14) angeschlossen, das einerseits über ein Bremsventil (8) und andererseits über ein ASR-Ventil (9, 12) selektiv mit einem Druckluftvorrat verbindbar ist,
- ein erster Drucksensor (18) in einer Druckluftleitung vom Bremsventil (8) zum Wechselventil (14; 15) zur Erfassung eines vom Fahrer des Kraftfahrzeugs angeforderten Bremsdrucks,
- ein Stabilitätssensor, mit dem eine Fahrzeuglage detektierbar ist,
wobei ferner eine Steuereinrichtung vorgesehen ist, mit der das ASR-Ventil (9, 12) in Abhängigkeit der Signale des Stabilitätssensors mit einem ESP-Druck beaufschlagbar ist, wobei ein Bremsdruck an dem Bremszylinder (7) aus einer Addition aus dem vom Drucksensor (18) gemessenen Bremsdruck und dem ESP-Druck resultiert.

2. Druckluftbetriebenes Bremssystem für ein Kraftfahrzeug nach Anspruch 1, **gekennzeichnet durch** folgende Merkmale:
- ein TP-Ventil (16),
- das TP-Ventil (16) ist an ein Wechselventil (15) angeschlossen, das einerseits über ein Bremsventil (8) und andererseits über ein Drucksteuerventil (17) mit einem Druckluftvorrat verbindbar ist,
- ein zweiter Drucksensor (19) in einer Druckluftleitung vom Wechselventil (15) zum TP-Ventil (16) zur Erfassung eines zum Anhänger aufgebauten Bremsdrucks,
wobei die Steuereinrichtung das TP-Ventil (16) selektiv in Abhängigkeit der Signale des Stabilitätssensors mit ESP-Druck so beaufschlagt, daß der Bremsdruck zum TP-Ventil (16) aus einer Addition aus dem vom Fahrer angeforderten Bremsdruck und dem ESP-Druck resultiert.

3. Kraftfahrzeug mit einem druckluftbetriebenem Bremssystem, das die folgenden Merkmale aufweist:
- wenigstens zwei Bremszylinder (7),
- die Bremszylinder (7) weisen ABS-Drucksteuerventile (6) auf,
- die ABS-Drucksteuerventile (6) sind jeweils an ein Wechselventil (14) angeschlossen, das einerseits über ein Bremsventil (8) und andererseits über ein ASR-Ventil (9, 12) selektiv mit einem Druckluftvorrat verbindbar ist,
- ein erster Drucksensor (18) in einer Druckluftleitung vom Bremsventil (8) zum Wechselventil (14; 15) zur Erfassung eines vom Fahrer angeforderten Bremsdrucks,
- ein Stabilitätssensor, mit dem eine Fahrzeuglage detektierbar ist,
wobei ferner eine Steuereinrichtung vorgesehen ist, mit der das ASR-Ventil (9, 12) in Abhängigkeit der Signale des Stabilitätssensors mit einem zur Stabilisierung bestimmten ESP-Druck beaufschlagbar ist, wobei ein Bremsdruck an dem Bremszylinder (7) aus einer Addition aus dem vom Fahrer angeforderten Bremsdruck und dem ESP-Druck resultiert.

4. Kraftfahrzeug mit einem druckluftbetriebenem Bremssystem nach Anspruch 3, **gekennzeichnet durch** die folgenden Merkmale:
- ein TP-Ventil (16),
- das TP-Ventil (16) ist an ein Wechselventil (15) angeschlossen, das einerseits über ein Bremsventil (8) und andererseits über ein Drucksteuerventil (17) mit einem Druckluftvorrat verbindbar ist,
- ein zweiter Drucksensor (19) in einer Druckluftleitung vom Wechselventil (15) zum TP-Ventil (16) zur Erfassung eines zum Anhänger aufgebauten Bremsdrucks,
wobei die Steuereinrichtung das TP-Ventil (16) selektiv in Abhängigkeit der Signale des Stabilitätssensors mit einem zur Stabilisierung bestimmten ESP-Druck beaufschlagt, wobei der Bremsdruck zum TP-Ventil (16) aus einer Addition aus dem vom Fahrer angeforderten Bremsdruck und dem ESP-Druck resultiert.

5. Verfahren zum Bremsen eines Kraftfahrzeugs nach einem der Ansprüche 3 oder 4, das die folgenden Schritte aufweist:
- Detektieren einer Fahrzeuglage, bei der ein ausgewählter erster Bremszylinder (7) automatisch mit Druckluft zu betätigen ist, während ein zweiter Bremszylinder (7) nicht mit Druckluft beaufschlagt zu halten ist,
- Betätigen des ASR-Ventils (9), so daß die beiden ABS-Drucksteuerventile (6) von erstem Bremszylinder (7) und zweitem Bremszylinder (7) mit Druckluft aus dem Vorrat beaufschlagt werden,
- Ansteuern des ABS-Drucksteuerventils (6) für den zu betätigenden Bremszylinder (7) so, daß dieser mit Druckluft beaufschlagt wird,
- Ansteuern des ABS-Drucksteuerventils (6) für den zu betätigenden Bremszylinder (7) so, daß dieser nicht mit Druckluft beaufschlagt gehalten wird.

## Claims

1. A compressed air-operated braking system for a motor vehicle having the following features:
- at least two brake cylinders (7),
- the brake cylinders (7) have ABS pressure control valves (6),
- the ABS brake control valves (6) area each connected to a shuttle valve (14) which itself can be selectively connected to a reservoir of compressed air either via a brake valve (8) or via an ASR valve (9, 12),
- a first pressure sensor (18) in a compressed air line from the brake valve (8) to the shuttle valve (14; 15) for detecting a braking pressure requested by the driver of the motor vehicle,
- a stability sensor which is able to detect the position of the vehicle,
there also being provided a control device by means of which an ESP pressure can be applied to the ASR valve (9, 12) dependent on the signals from the stability sensor, a braking pressure at the brake cylinder (7) resulting from the addition of the braking pressure measured by the pressure sensor (18) to the ESP pressure.

2. A compressed air-operated braking system for a motor vehicle in accordance with claim 1,
**characterised by** the following features:
- a TP valve (16),
- the TP valve (16) is connected to a shuttle valve (15) which can in turn be connected to a reservoir of compressed air on one hand by a brake valve (8) and on the other by a pressure control valve (17),
- a second pressure sensor (19) in a compressed air line from the shuttle valve (15) to the TP valve (16) for detecting a braking pressure built up towards the trailer,
the control device applying an ESP pressure to the TP valve (16) dependent on the signals from the stability sensor such that the braking pressure to the TP valve (16) results from the addition of the braking pressure requested by the driver to the ESP pressure.

3. A motor vehicle with a compressed air-operated braking system which has the following features:
- at least two brake cylinders (7),
- the brake cylinders (7) have ABS pressure control valves (6),
- the ABS brake control valves (6) are each connected to a shuttle valve (14) which can in turn be selectively connected to a reservoir of compressed air on one hand via a brake valve (8) and on the other via an ASR valve (9, 12),
- a first pressure sensor (18) in a compressed air line from the brake valve (8) to the shuttle valve (14; 15) for detecting a braking pressure requested by the driver of the motor vehicle,
- a stability sensor which is able to detect the position of the vehicle,
there also being provided a control device by means of which a stabilising ESP pressure can be applied to the ASR valve (9, 12) dependent on the signals from the stability sensor, a braking pressure at the brake cylinder (7) resulting from the addition of the braking pressure measured by the pressure sensor (18) to the ESP pressure.

4. A motor vehicle with a compressed air-operated braking system in accordance with claim 3,
**characterised by** the following features:
- a TP valve (16),
- the TP valve (16) is connected to a shuttle valve (15) which can in turn be connected to a reservoir of compressed air on one hand by a brake valve (8) and on the other by a pressure control valve (17),
- a second pressure sensor (19) in a compressed air line from the shuttle valve (15) to the TP valve (16) for detecting a braking pressure built up towards the trailer,
the control device applying a stabilising ESP pressure to the TP valve (16) dependent on the signals from the stability sensor, the braking pressure to the TP valve (16) resulting from the addition of the braking pressure requested by the driver to the ESP pressure.

5. A process for braking a motor vehicle in accordance with one of claims 3 or 4 and having the following steps:
- detection of a vehicle position in which compressed air is automatically applied to a selected first brake cylinder (7), while no compressed air is applied to a second brake cylinder (7),
- actuation of the ASR valve (9) such that compressed air from the reservoir is applied to the two ABS pressure control valves (6) in the first brake cylinder (7) and the second brake cylinder (7),
- triggering of the ABS pressure control valve (6) for the brake cylinder (7) to be actuated so that compressed air is applied to it,
- triggering of the ABS pressure control valve (6) for the brake cylinder (7) to be actuated so that no compressed air is applied to it.

## Revendications

1. Système de freinage pneumatique pour un véhicule automobile, qui présente les caractéristiques suivantes :
- au moins deux cylindres de frein (7),
- les cylindres de frein (7) comportent des vannes de commande de pression ABS (6) (système anti-blocage),
- les vannes de commande de pression ABS (6) sont raccordées respectivement à une vanne de sélection alternative (14), qui peut être reliée sélectivement, d'une part par l'intermédiaire d'une vanne de freinage (8) et d'autre part par l'intermédiaire d'une vanne ASR (9, 12) (régulation anti-patinage), à une réserve d'air comprimé,
- un premier capteur de pression (18) dans une conduite d'air comprimé de la vanne de freinage (8) à la vanne de sélection alternative (14 ; 15), pour détecter ou relever une pression de freinage demandée par le conducteur du véhicule automobile,
- un capteur de stabilité à l'aide duquel peut être détectée une position d'assiette du véhicule,
le système comprenant par ailleurs un dispositif de commande à l'aide duquel la vanne ASR (9, 12) peut être alimentée, en fonction des signaux du capteur de stabilité, avec une pression ESP (programme électronique de contrôle de stabilité), une pression de freinage au niveau du cylindre de frein (7) résultant d'une addition de la pression de freinage mesurée par le capteur de pression (18) et de la pression ESP.

2. Système de freinage pneumatique pour un véhicule automobile, selon la revendication 1,
**caractérisé par** les particularités suivantes :
- une vanne TP (16) (Trailer Protection valve = vanne de protection de remorque),
- la vanne TP (16) est raccordée à une vanne de sélection alternative (15) qui peut être raccordée, d'une part par l'intermédiaire d'une vanne de freinage (8) et d'autre part par l'intermédiaire d'une vanne de commande de pression (17), à une réserve d'air comprimé,
- un second capteur de pression (19) dans une conduite d'air comprimé de la vanne de sélection alternative (15) à la vanne TP (16), pour détecter ou relever une pression de freinage établie vers la remorque,
le dispositif de commande alimentant sélectivement, en fonction des signaux du capteur de stabilité, la vanne TP (16) avec la pression ESP, de façon telle que la pression de freinage vers la vanne TP (16) résulte d'une addition de la pression de freinage demandée par le conducteur et de la pression ESP.

3. Véhicule automobile comprenant un système de freinage pneumatique, qui présente les caractéristiques suivantes :
- au moins deux cylindres de frein (7),
- les cylindres de frein (7) comportent des vannes de commande de pression ABS (6),
- les vannes de commande de pression ABS (6) sont raccordées respectivement à une vanne de sélection alternative (14), qui peut être reliée sélectivement, d'une part par l'intermédiaire d'une vanne de freinage (8) et d'autre part par l'intermédiaire d'une vanne ASR (9, 12), à une réserve d'air comprimé,
- un premier capteur de pression (18) dans une conduite d'air comprimé de la vanne de freinage (8) à la vanne de sélection alternative (14 ; 15), pour détecter ou relever une pression de freinage demandée par le conducteur,
- un capteur de stabilité à l'aide duquel peut être détectée une position d'assiette du véhicule,
le système comprenant par ailleurs un dispositif de commande à l'aide duquel la vanne ASR (9, 12) peut être alimentée, en fonction des signaux du capteur de stabilité, avec une pression ESP destinée à la stabilisation, une pression de freinage au niveau du cylindre de frein (7) résultant d'une addition de la pression de freinage demandée par le conducteur et de la pression ESP.

4. Véhicule automobile comprenant un système de freinage pneumatique, selon la revendication 3, **caractérisé par** les particularités suivantes :
- une vanne TP (16),
- la vanne TP (16) est raccordée à une vanne de sélection alternative (15) qui peut être raccordée, d'une part par l'intermédiaire d'une vanne de freinage (8) et d'autre part par l'intermédiaire d'une vanne de commande de pression (17), à une réserve d'air comprimé,
- un second capteur de pression (19) dans une conduite d'air comprimé de la vanne de sélection alternative (15) à la vanne TP (16), pour détecter ou relever une pression de freinage établie vers la remorque,
le dispositif de commande alimentant sélectivement, en fonction des signaux du capteur de stabilité, la vanne TP (16) avec une pression ESP destinée à la stabilisation, la pression de freinage vers la vanne TP (16) résultant de l'addition de la pression de freinage demandée par le conducteur, et de la pression ESP.

5. Procédé de freinage d'un véhicule automobile selon l'une des revendications 3 ou 4, présentant les étapes suivantes :
- détection d'une position d'assiette du véhicule pour laquelle un premier cylindre de frein (7) choisi doit être automatiquement alimenté avec de l'air comprimé, tandis qu'un second cylindre de frein (7) doit être maintenu non alimenté en air comprimé,
- actionnement de la vanne ASR (9) de sorte que les deux vannes de commande de pression ABS (6) du premier cylindre de frein (7) et du second cylindre de frein (7) soient alimentées en air comprimé à partir de la réserve d'air comprimé,
- commande de la vanne de commande de pression ABS (6) pour le cylindre de frein (7) à actionner, de façon à ce que celui-ci soit alimenté en air comprimé,
- commande de la vanne de commande de pression ABS (6) pour le cylindre de frein (7) à actionner de façon à ce que celui-ci soit maintenu non alimenté en air comprimé.
